# EUROPEAN PATENT APPLICATION

(11) **EP 1 911 809 A1**
(43) Date of publication of application: **16.04.2008**
(21) Application number: 06781241.2
(22) Date of filing: 19.07.2006
(51) Int. Cl.: C08L 67/04, C08J 5/04, C08L 67/02, C08L 77/10, C08L 101/16

(54) **RESIN COMPOSITIONS, METHOD OF PRODUCING THE SAME AND MOLDED ARTICLE OBTAINED THEREFROM**

(30) Priority: 02.08.2005 JP 2005223530; 22.08.2005 JP 2005239243
(71) Applicant: UNITIKA LTD., Amagasaki-shi, Hyogo 660-0824 (JP)
(72) Inventor: KABASHIMA, Yohei, Kyoto 611-0021 (JP); KAWADA, Ken-ichi, Kyoto 611-0021 (JP)
(74) Representative: Pautex Schneider, Nicole Véronique
(86) International application number: PCT/JP2006/314234
(87) International publication number: WO 2007/015371

(57) **Abstract**

Provided are: a first resin composition, which is a polylactic acid-based resin composition containing a polylactic acid resin composition prepared by mixing a polylactic acid resin and a (meth)acrylic acid ester compound in the presence of a peroxide, and a high-strength fiber; and a second resin composition, which contains 70 to 99 parts by mass of a crosslinked biodegradable polyester resin and 1 to 30 parts by mass of an aramid fiber and/or an LCP fiber. In a preferred case, the second resin composition contains 0.01 to 10 parts by mass of a carbodiimide compound with respect to 100 parts by mass of the sum of the crosslinked biodegradable polyester resin and the aramid fiber and/or the LCP fiber.

## Description

### Technical Field

The present invention relates to a resin composition, a method of producing the same and a molded article obtained therefrom.

### Background Art

Resins, such as polypropylenes (PP), ABSs, polyamides (PA6, PA66), polyesters (PET, PBT) and polycarbonates (PC), have been commonly used as raw materials for resin molded articles. Molded articles produced from such resins excel in moldability and mechanical strength, but, at the same time, increase the amount of refuse when disposed of as wastes. What is worse, such molded articles are hardly decomposed in the natural environment and therefore remain in the ground almost indefinitely after buried in the earth.

In the meantime, biodegradable polyester resins including polylactic acids, which are attractive from the viewpoint of environmental conservation, have lately attracted considerable attention. Among biodegradable resins, polylactic acids, polyethylene succinates and polybutylene succinates are low in cost because of mass-producibility and great availability. Polylactic acids can be produced using a plant such as corn or sweet potato as a raw material.

However, as-produced polylatic acids do not always exhibit sufficient heat resistance and mechanical strength when used for general industrial products. Further, articles produced on the premise of being installed and removed in daily use, such as cell-phone covers, are required to have not only heat resistance and mechanical strength, as described above, but a certain level or above of flexibility.

In these circumstances, there are proposed in Japanese Patent Laid-Open No. 2005-23250 molded articles which are produced using, as a raw material, a biodegradable resin that mainly contains a lactic acid-based resin and is reinforced with an aramid (aromatic polyamide) fiber. However, the reinforcement with an aramid fiber is insufficiently effective for improving the heat resistance and impact resistance of the molded articles, and baking is needed after molding to obtain a practical level of heat resistance. What is more, flexibility of the molded articles after baking is on an insufficient level.

In the meantime, there is proposed in Japanese Patent Laid-Open No. 2003-128901 a resin composition prepared by kneading a polylactic acid and a (meth)acrylic acid ester compound in the presence of a peroxide. The resin composition, however, does not necessarily have a sufficient level of impact resistance.

Furthermore, polylactic acids have a low crystallization rate and therefore a long molding cycle, and molded articles obtained as described above are poor in mechanical strength and heat resistance.

For a method of improving the crystallization rate of biodegradable polyester resins, there has been developed a method, for example, in which ordinary talc, silica, calcium lactate or the like, as a neucleating agent, is added to a lactic acid-based polymer (e.g. Japanese Patent Laid-Open No. 8-193165). Even with this method, however, the crystallization rate is still low, and molded articles obtained from such resins have heat resistance as low as 100° C or less.

There is also proposed a method in which a low-molecular-weight compound having an amide group and a layered clay mineral having been made organic with an organic onium salt are added to a polylactic acid, thereby exhibiting a synergistic effect in improving the crystallization rate and heat resistance of the polylactic acid (e.g. Japanese Patent Laid-Open No. 2003-226801). In this case, improvements in the crystallization rate and heat resistance are observed, but the effect is still insufficient. As a result, the molding cycle in injection molding is still long and the molded articles do not have heat resistance sufficient for practical use.

The present invention is intended to address the problems. Accordingly, it is an object of the present invention to provide a resin composition having excellent physical properties, a method of producing the same and a molded article obtained therefrom.

### Disclosure of the Invention

To achieve the object, a resin composition of the present invention contains a crosslinked biodegradable polyester resin and a high-strength fiber.

In particular, the resin composition of the present invention, contains a polylactic acid resin composition which is prepared by mixing a polylactic acid resin and a (meth)acrylic ester compound in the presence of a peroxide, and a high-strength fiber.

In the resin composition, the high-strength fiber is suitably a polyester fiber.

Suitably the polyester fiber is such that the glass transition temperature is not observed at 90°C or less.

In particular, another resin composition of the present invention, contains 70 to 99% by mass of the crosslinked biodegradable polyester resin and 1 to 30% by mass of an aramid fiber and/or an LCP fiber.

Suitably the resin composition contains 0.01 to 10 parts by mass of a carbodiimide compound with respect to 100 parts by mass of the sum of the crosslinked biodegradable polyester resin and the aramid fiber and/or the LCP fiber.

Suitably the resin composition containing the crosslinked biodegradable polyester resin and the aramid fiber and/or the LCP fiber contains 0.01 to 20 parts by mass of the (meth)acrylic acid ester compound, as a crosslinking agent, with respect to 100 parts by mass of the biodegradable polyester resin.

Suitably the biodegradable polyester resin is a polylactic acid.

Suitably the carbodiimide compound has an isocyanate group on an end group thereof.

Suitably the biodegradable polyester resin is produced from a plant raw material.

A method of producing the resin composition of the present invention is such that in the production of a polylactic acid-based resin composition which contains a polylactic acid resin composition prepared by mixing a polylactic acid resin and a (meth)acrylic ester compound in the presence of a peroxide, and a high-strength fiber, the high-strength fiber is in advance bundled in sizes of 1 to 5 mm wide and 1 to 5 mm long.

In the production method, suitably a polyester resin is used for bundling the high-strength fiber.

A molded article of the present invention is produced by molding the resin composition.

The resin composition of the present invention contains: a polylactic acid resin composition prepared by mixing a polylactic resin and a (meth)acrylic ester compound in the presence of a peroxide; and a high-strength fiber, and therefore excel in heat resistance, impact resistance and flexibility. The use of the resin composition for casings of electronic equipment or parts of the same which are installed and removed in daily use can greatly broaden the field where polylactic acid resins, as a low-environmental-load material, are applied, and largely increase the industrial availability of polylactic acid resins.

Further, another resin composition of the present invention contains 70 to 99% by mass of a crosslinked biodegradable polyester resin and 1 to 30% by mass of an aramid fiber and/or an LCP fiber, and in particular, the resin composition of the present invention contains 0.01 to 10 parts by mass of a carbodiimide compound with respect to 100 parts by mass of the sum of the crosslinked biodegradable polyester resin and the aramid fiber and/or the LCP fiber. Thus, it is made possible to provide resin compositions which have excellent mechanical strength, heat resistance, moist heat resistance and moldability and are less dependent on petroleum products. Particularly the mixing of the carbodiimide compound makes it possible to greatly improve the impact strength and moist heat resistance of the resin composition. These resin composition can be molded into various articles by various molding processes and is therefore highly available for industrial use.

### Best Mode for Carrying Out the Invention

The polylactic acid-based resin composition of the present invention contains: a resin composition prepared by mixing a polylactic acid resin and a (meth)acrylic ester compound in the presence of a peroxide; and a high-strength fiber.

Another resin composition of the present invention contains 70 to 99% by mass of a crosslinked biodegradable polyester resin and 1 to 30% by mass of an aramid fiber and/or an LCP fiber. Suitably the resin composition contains 0.01 to 10 parts by mass of a carbodiimide compound with respect to 100 parts by mass of the sum of the crosslinked biodegradable polyester resin and the aramid fiber and/or the LCP fiber.

As the polylactic acid resin in the polylactic acid-based resin composition, any of poly(L-lactic acid)s, poly(D-lactic acid)s, and a mixture or a copolymer thereof can be used from the viewpoint of heat resistance and moldability. Among these resins, it is preferable from the viewpoint of biodegradability to use a poly(L-lactic acid) as a main constituent.

A polylactic acid resin containing a poly(L-lactic acid) as a main constituent has different melting points depending on the optical purity. In the present invention, the melting point of the polylactic acid resin is preferably 160°C or more, taking into account the mechanical properties and heat resistance of the molded articles obtained from the polylactic acid-based resin composition. To allow the polylactic acid resin containing the poly(L-lactic acid) as a main constituent to have a melting point of 160°C or more, the percentage of the D-lactic acid constituent should be lower than about 3% by mol.

Preferably the melt flow rate of the polylactic acid resin at 190°C with a load 21.2 N (for example, a value obtained in accordance with JIS K-7210 (test conditions 4)) is 0.1 to 50 g/10 min., more preferably 0.2 to 20 g/10 min. and much more preferably 0.5 to 10 g/10 min. If the melt flow rate is more than 50 g/10 min-, the melt viscosity becomes too low, which sometimes results in molded articles inferior in mechanical properties or heat resistance. If the melt flow rate is less than 0.1 g/10 min., the load during molding becomes high, which sometimes results in low operating efficiency.

The polylactic acid resin is produced by the known melt polymerization process alone or in combination with the solid phase polymerization process. For a method of controlling the melt flow rate of the polylactic acid resin so that it falls within the predetermined range, when the melt flow rate is too high, a small amount of a chain-lengthening material, such as a diisocyanate compound, a bisoxazoline compound, an epoxy compound or an acid anhydride, is used to increase the molecular weight of the resin; and when the melt flow rate is too low, the polylactic acid resin is mixed with a polyester resin having a high melt flow rate or a low-molecular-weight compound.

The (meth)acrylic ester compound is used to link the polylactic acid molecules to accelerate the crystallization of the polylactic acid, thereby improving the heat resistance of the polylactic acid resin. Among the (meth)acrylic ester compounds, compounds having 2 or more (meth)acryl groups or compounds having one or more (meth)acryl groups and one or more glycidyl or vinyl groups are preferable because such compounds are highly reactive with polylactic acid resins, less likely to allow monomers to remain, relatively less toxic, and less likely to color polylactic acid resins. Specific examples of such compounds include: glycidyl methacrylate, glycidyl acrylate, glycerol dimethacrylate, trimethyrolpropane trimethacrylate, trimethyrolpropane triacrylate, aryloxypolyethylene glycol monoacrylate, aryloxy(poly)ethylene glycol monomethacrylate, (poly)ethylene glycol dimethacrylate, (poly)ethylene glycol diacrylate, (poly)propylene glycol dimethacrylate, (poly)propylene glycol diacrylate, and (poly)tetramethylene glycol dimethacrylate. The (meth)acrylic ester compounds may also include compounds in which the alkylene glycol parts thereof are replaced with copolymers of alkylenes having various lengths. Specific examples of the (meth)acrylic ester compounds further include: butanediol methacrylate and butanediol acrylate.

The amount of the methacrylic ester compound mixed is preferably 0.01 to 20 parts by mass, more preferably 0.05 to 10 parts by mass and much more preferably 0.1 to 5 parts by mass with respect to 100 parts by mass of the polylactic acid resin.

The peroxide is used to accelerate the reaction of the (meth)acrylic ester compound with the polylactic acid resin. Specific examples of the peroxide include: benzoyl peroxide, bis(butyl peroxy)trimethylcyclohexane, bis(butyl peroxy)cyclododecane, butylbis(butyl peroxy)valerate, dicumylperoxide, butyl peroxybenzoate, dibutylperoxide, bis(butyl peroxy)diisopropylbenzene, dimethyl-di(butyl peroxy)hexane, dimethyl-di(butyl peroxy)hexyne and butyl peroxycumene.

The amount of the peroxide used is preferably 0.1 to 20 parts by mass and more preferably 0.1 to 10 parts by mass with respect to 100 parts by mass of the polylactic acid resin. The peroxide can be used in amount of more than 20 parts by mass, but using such an amount of the peroxide is disadvantage in cost. Such a peroxide decomposes when mixing with the resin, and even used in the mixing, is sometimes not contained in the resin composition obtained.

Using a polyester fiber as the high-strength fiber enables an excellent impact resistance. Further, using a polyester fiber whose glass transition temperature is not observed at 90°C or less accelerates the crystallization during molding, whereby the time required for cooling can be decreased. Examples of the polyester fiber whose glass transition temperature is not observed at 90°C or less include: polyarylate fibers, polyethylene naphthalate fibers, polycyclohexanedimethylene terephthalate fibers and polycyclohexanedimethylene terephthalate isophthalate fibers.

If the high-strength fiber is in advance bundled in sizes of 1 to 5 mm wide and 1 to 5 mm long, the frequency of clogging at a high-strength-fiber feeding portion of a mixing machine can be reduced. If the high-strength fiber is bundled in size smaller than the size, the effect of reducing the clogging is small. Conversely, if the high-strength fiber is bundled in size larger than the size, the dispersibility during mixing is decreased, which might cause low impact resistance.

For a method of bundling the high-strength fiber, a method can be used in which high-strength fibers having been grouped together to have an intended bundle width are dipped in a molten resin, solidified by cooling, and cut with a cutter etc. into bundles each having an intended length. In the case that the high-strength fiber is a polyester fiber, a polyester resin can be suitably used as a resin in which the fiber is dipped. If a resin other than polyester resins is used, the adhesion between the high-strength fiber and the polylactic acid resin becomes poor, which might cause low impact resistance. Specific examples of the polyester resins used include: polylactic acid, polyethylene terephthalate, and polybutylene terephthalate. From the viewpoint of the adhesion described above, it is preferable to use a polylactic acid resin.

The amount of the high-strength fiber mixed is preferably 1 to 50 parts by mass, more preferably 1 to 20 parts by mass and much more preferably 1 to 10 parts by mass with respect to 100 parts by mass of the polylactic acid resin. The high-strength fiber can be added from the hopper of an extruder or in the course of mixing through the use of a side feeder. The high-strength fiber can be used in the form of a masterbatch. In the case that the masterbatch is used, it is diluted with a base resin at the time of molding.

To improve the mechanical strength and henat resistance, a glass fiber may be added to the polylactic acid-based resin composition of the present invention. The amount of the glass fiber added is preferably 1 to 50 parts by mass, more preferably 1 to 20 parts by mass and much more preferably 1 to 10 parts by mass with respect to 100 parts by mass of the polylactic acid resin. The glass fiber may undergo surface treatment so that the adhesion to the resin is enhanced. The glass fiber can be added from the hopper of an extruder or in the course of mixing through the use of a side feeder. The glass fiber can be used in the form of a masterbatch. In the case that the masterbatch is used, it is diluted with a base resin at the time of molding.

To the polylactic acid-based resin composition of the present invention, additives such as pigments, heat stabilizers, antioxidants, weather resistant agents, flame-retardants, plasticizers, lubricants, mold release agents, antistatic agents, fillers or nucleating agents can be added as long as the addition does not impair the properties of the resin composition.

Examples of the heat stabilizers or the antioxidants include: hindered phenols, phosphorus compounds, hindered amines, sulfur compounds, copper compounds, and halides of alkaline metals.

For the flame-retardants, any one of halogen flame-retardants, phosphorus flame-retardants and inorganic flame-retardants can be used. Considering the environment, use of non-halogen flame-retardants is desirable. Examples of the non-halogen flame-retardants include: phosphrous flame-retardants, hydrated metal compounds (aluminum hydroxide, magnesium hydroxide), N-containing compounds (melamine compounds, guanidine compounds), and inorganic compounds (borates, molybdenum compounds).

Among the fillers, inorganic fillers include: for example, talc, calcium carbonate, zinc carbonate, wallastonite, silica, alumina, magnesia, calcium silicate, sodium aluminate, calcium aluminate, sodium aluminosilicate, magnesium silicate, glass balloon, carbon black, zinc oxide, antimony trioxide, zeolite, hydrotalcite, metal fiber, metal whisker, ceramic whisker, potassium titanate, boron nitride, graphite, and carbon fiber.

Among the nucleating agents, inorganic nucleating agents include: for example, talc and kaolin. And organic nucleating agents include: for example, sorbitol compounds, benzoic acid and the metal salts thereof, phosphoric ester metal salts, and rosin compounds.

Any mixing method can be used to mix the polylactic acid-based resin composition of the present invention and these additives.

In the production of the polylactic acid-based resin composition of the present invention, any mixing unit can be used to mix a polylactic acid resin, a (meth)acrylic ester, a peroxide and a high-strength fiber. Such unit includes, for example, melt mixing using a commonly used extruder. For better mixing conditions, preferably a twin-screw extruder is used. The mixing temperature is preferably in the range of (the melting point of the polylactic acid resin + 5°C) to (the melting point of the polylactic acid resin + 100°C) and the mixing time is preferably 20 seconds to 30 minutes. The temperature lower than (the melting point of the polylactic acid resin + 5°C) or the mixing time shorter than 20 seconds is likely to cause insufficient mixing or reaction. Conversely, the temperature higher than (the melting point of the polylactic acid resin + 100°C) or the mixing time longer than 30 minutes sometimes causes the decomposition or coloring of the resin. For a mixing method, dry blending or a method in which the high-strength fiber is fed using a powder feeder is preferable.

The resin composition of the present invention will be described which contains a crosslinked biodegradable polyester resin and an aramid fiber and/or an LCP fiber and suitably further contains a carbodiimide compound.

Examples of a biodegradable polyester resin used in the crosslinked biodegradable polyester resin include: poly(L-lactic acid), poly(D-lactic acid), polyglycol acid, polycaprolactone, polybutylene succinate, polyethylene succinate, polybutylene adipate/ terephthalate, and polybutylene succinate/terephthalate. Among these polyester resins, a poly(L-lactic acid), a poly(D-lactic acid), and a mixture or a copolymer thereof can be used from the viewpoint of heat resistance and moldability. Details of this are as described above.

A melt flow rate of such a biodegradable polyester resin at 190°C with a load 21.2 N is preferably 0.1 to 50 g/10 min., more preferably 0.2 to 20 g/10 min. and most suitably 0.5 to 10 g/10 min. If the melt flow rate is more than 50 g/10 min., the melt viscosity becomes so low that the molded articles are more likely to have inferior mechanical strength and heat resistance. If the melt flow rate is less than 0.1 g/10 min., the load during molding becomes so heavy that the operating efficiency sometimes becomes low.

The biodegradable polyester resin used in the present invention is produced by the known melt polymerization process alone or in combination with the solid phase polymerization process. For a method of controlling the melt flow rate of the biodegradable polyester resin so that it falls within the predetermined range, when the melt flow rate is too high, a small amount of a chain-lengthening material, such as a diisocyanate compound, a bisoxazoline compound, an epoxy compound or an acid anhydride, is used to increase the molecular weight of the resin; and when the melt flow rate is too low, a biodegradable polyester resin having a high melt flow rate or a low-molecular-weight compound is incorporated.

The crosslinked biodegradable polyester resin used in the present invention is prepared by introducing a crosslinked structure into the biodegradable polyester resin. Crosslinking agents usable in this introduction of a crosslinked structure include: divinylbenzene, diallylbenzene, divinylnaphthalene, divinylphenyl, divinylcarbazole, divinylpyridine, and nuclear-substituted compounds or closely related homologues thereof; polyfunctional acrylic acid compounds such as ethylene glycol diacrylate, butylene glycol diacrylate, triethylene glycol diacrylate, 1,6-hexanediol diacrylate and tetramethylol methane tetraacrylate; polyfunctional methacrylic acid compounds such as ethylene glycol dimethacrylate, butylene glycol dimethacrylate, triethylene glycol dimethacrylate, tetraethylene glycol dimethacrylate, 1,6-hexanediol dimethacrylate, 1,9-nonanediol dimethacrylate, 1,10-decanediol dimethacrylate, trimethylol propane trimethacrylate and tetramethylol methane tetramethacrylate; polyvinyl esters, polyallyl esters, polyacrloyloxyalkyl esters and polymethacrloyloxyalkyl esters of aliphatic or aromatic polyvalent carboxylic acids, such as divinyl phthalate, diallyl phthalate, diallyl malate and bisacryloyloxyethyl terephthalate; polyvinyl ethers and polyallyl ethers of aliphatic or aromatic polyhydric alcohols, such as diethylene glycol divinyl ether, hydroquinone divinyl ether and bisphenol A diallyl ether; allyl esters, triallyl phosphates and trisacryloxyethyl phosphates of cyanuric acid or isocyanuric acid, such as triallyl cyanurate and triallyl isocyanurate; maleimide compounds such as N-phenylmaleimide and N,N'-m-phenylenebismaleimide; and polyfunctional monomers of compounds having 2 or more triple bonds, such as dipropargyl phthalate and dipropargyl maleate.

Among these compounds, (meth)acrylic ester compounds are desirable from the viewpoint of crosslinkability, like the case of the polylactic acid-based resin compositions described above. This ingredient causes the polyester resin ingredient to be crosslinked, thereby improving mechanical strength, heat resistance and dimensional stability of the molded articles. The details of the (meth)acrylic ester compounds are the same as those described above in relation to the polylactic acid-based resin compositions.

In mixing a (meth)acrylic ester compound with the biodegradable polyester resin, it is preferable to use a peroxide in combination with the (meth)acrylic ester compound, because the peroxide accelerates the crosslinking reaction. The details of the peroxides are the same as those described above in relation to the polylactic acid-based resin compositions.

A method of mixing a (meth)acrylic ester compound with the biodegradable polyester resin is also the same as that described above in relation to the polylactic acid-based resin compositions. In such mixing, when a (meth)acrylic ester compound is liquid, preferably the (meth)acrylic ester compound is poured along the extruder using a pressure pump. A peroxide can also be mixed in the same manner.

One preferred method of using a (meth)acrylic ester compound in combination with a peroxide is to dissolve or disperse the (meth)acrylic ester compound and/or the peroxide in a medium and then pour the solution or dispersion into the mixer. This method enables a remarkable improvement in operating efficiency. Specifically, melt mixing can be done by pouring the solution or dispersion of a (meth)acrylic ester compound into the mixer during the melt mixing of a biodegradable polyester resin ingredient and a peroxide or pouring the solution or dispersion of a (meth)acrylic ester compound and a peroxide into the mixer during the melt mixing of a biodegradable polyester resin.

For the medium in which a (meth)acrylic ester compound and/or a peroxide is dissolved or dispersed, any of commonly used media can be used. Among such media, a plasticizer is preferable which is highly compatible with the biodegradable polyester resin of the present invention. Examples of such plasticizers include: one or more plasticizers selected from the group consisting of aliphatic polyvalent carboxylic ester derivatives, aliphatic polyhydric alcohol ester derivatives, aliphatic oxy ester derivatives, aliphatic polyether derivatives, aliphatic polyether polyvalent carboxylic ester derivatives. Specific examples of such compounds include: dimethyl adipate, dibutyl adipate, triethylene glycol diacetate, methyl acetylricinoleate, acetyl tributyl citrate, polyethylene glycol, dibutyl diglycol succinate, glycerin diacetomonocaprylate, and glycerin diacetomonolaurate. The amount of the plasticizer used is 30 parts by mass or less and preferably 0.1 to 20 parts by mass with respect to 100 parts by mass of the biodegradable polyester resin. In the case that the reactivity of the crosslinking agent is low, a plasticizer may not be used, whereas in the case that the reactivity of the crosslinking agent is high, it is preferable to use a plasticizer in an amount of 0.1 parts by mass or more. These plasticizers sometimes volatilize during the mixing with the resin, and thus, even if used during the production of a biodegaradable polyester resin, the resultant resin composition sometimes does not contain the plasticizers.

In the present invention, mixing the crosslinked biodegradable polyester resin with an aramid fiber and/or an LCP fiber enables the reinforcement of the heat resistance and mechanical properties of the resin.

The aramid fiber used in the present invention is a fiber made up of a resin that has an aromatic amide structure, such as polyparaphenylene terephthalamide or copolyparaphenylene/3,4-oxydiphenylene terephthalamide. Specific examples of the aramid fiber include: "KEVLAR", manufactured by DuPont, and "TECHNORA" and "TOWARON", manufactured by Teijin-Technoproducts LTD. These fibers are usually formed by dissolving an aramid raw material in sulfuric acid or N-methylpyrrolidone and wet-spinning the solution.

The LCP (Liquid Crystalline Polyester) fiber used in the present invention is a fiber made up of a resin that exhibits liquid crystal properties when it is in the molten state and usually means a fiber made up of a polyester that exhibits liquid crystal properties when it is in the molten state. The polyester that exhibits liquid crystal properties in the molten state means a polyester such that when the sample powder is placed on a heating sample stand, which is located between two sheets of polarizer lying at right angles to each other, and heated up, the sample powder has a light transmitting property in the temperature range where it is flowable.

Examples of such a polyester include aromatic polyesters. The aromatic polyesters are made up of an aromatic dicarboxylic acid, an aromatic diol and/or an aromatic hydroxycarboxylic acid, or derivatives thereof. Such polyesters sometime include copolymers of the above-described aromatic polyesters with an alicyclic dicarboxylic acid, an alicyclic diol, an aliphatic diol, or derivatives thereof.

Examples of the aromatic dicarboxylic acid include: terephthalic acid, isophthalic acid, 4,4'-dicarboxydiphenyl, 2,6-dicarboxynaphthalene, 1,2-bis(4-carboxyphenoxy)ethane, and nuclear-substituted forms thereof having been substituted with an alkyl, aryl, alkoxy or halogen group.

Examples of the aromatic diol include: hydroquinone, resorcin, 4,4'-dihydroxydiphenyl, 4,4'-dihydroxybenzophenone, 4,4'-dihydroxydiphenylmethane, 4,4'-dihydroxydiphenylethane, 2,2-bis(4-hydroxyphenyl)propane, 4,4'-dihydroxydiphenylether, 4,4'-dihydroxydiphenylsulfone, 4,4'-dihydroxydiphenylsulfide, 2,6-dihydroxynaphthalene, 1,5-dihydroxynaphthalene, and the nuclear-substituted forms thereof having been substituted with an alkyl, aryl, alkoxy or halogen group.

Examples of the aromatic hydroxycarboxylic acid include: p-hydroxybenzoic acid, m-hydroxybenzoic acid, 2-hydroxynaphthalene-6-carboxylic acid, 1-hydroxynaphthalene-5-carboxylic acid, and nuclear-substituted forms thereof having been substituted with an alkyl, aryl, alkoxy or halogen group.

Examples of the alicyclic dicarboxylic acid include: trans-1,4-dicarboxycyclohexane, cis-1,4-dicarboxycyclohexane, and substituted forms thereof having been substituted with an alkyl, aryl or halogen group.

Examples of the alicyclic or aliphatic diol include: trans-1,4- dihydroxycyclohexane, cis-1,4-dihydroxycyclohexane, ethylene glycol, 1,4-butanediol, and xylylenediol.

The LPC fibers are usually formed by melt-spinning these polyester raw materials. Specific examples of the LPC fiber include: "Bectran", which is made up of hydroxybenzoic acid and hydroxynaphthalene carboxylic acid and manufactured by Kuraray Co., Ltd., and "Sumika Super Fiber", which is made up mainly of hydroxybenzoic acid and manufactured by Sumitomo Chemical Co., Ltd.

The amount of the aramid fiber and/or the LCP fiber mixed needs to be 1 to 30 parts by mass with respect to 99 to 70 parts by mass of the crosslinked biodegradable polyester resin. The amount is preferably 5 to 20 parts by mass (the amount of the crosslinked biodegradable polyester resin is 95 to 80 parts by mass). The amount less than 1 part by mass leads to insufficient reinforcing effect on the heat resistance and mechanical properties. The amount of more than 30 parts by mass may cause poor feeding to the extruder, clogging of the hopper, poor flowability of the resin or impaired moldability, and in addition, is sometimes less economical and therefore disadvantageous in cost.

The diameter of the aramid fiber and/or the LCP fiber is preferably 1 to 40 µm and more desirably 5 to 20 µm. If the diameter is less than 1 µm, the cost of the fiber(s) increases, which results in decreased economy, or the bulk density of the fiber(s) decreased, which results in inferior handleability. Conversely, if the diameter is more than 40 µm, the effect of improving the strength of the resin compositions decreases.

The length of the aramid fiber and/or the LCP fiber is preferably 0.5 to 30 mm, more preferably 1 to 10 mm and much more preferably 2 to 6 mm. If the length is less than 0.5 mm, the effect of improving the heat resistance and strength of the resin compositions becomes low. Conversely, if the length is more than 30 mm, bridging may occur in the hopper of the extruder, which leads to the problem of decreasing the operating efficiency or impairing the melting properties of the resin.

The aramid fiber and/or the LCP fiber can take any form, such as a staple fiber, cut filament, chopped strand, chopped strand mat or pulp, as long as the fiber(s) has(have) the diameter and length described above.

A surface treatment can be applied to the aramid fiber and/or the LCP fiber to improve the dispersibility in or adhesion to the crosslinked biodegradable polyester resin. For the surface treatment, a compound having 2 or more epoxy, carboxyl, carbonyl, oxazonyl, hydroxide or amino groups, such as acid anhydride-modified polyolefins, ethylene-glycidyl methacrylate copolymers (EGMA), epoxy resins, acid anhydride-modified polyesters, phenoxy resins, dinitroamines and acid anhydride-modified polyesters, are preferable.

For a method of mixing the aramid fiber and/or the LCP fiber with the crosslinked biodegradable polyester resin, any method can be employed. However, the following two methods are particularly preferable. The first method is to prepare a compound by incorporating a cut fiber or a staple fiber having a predetermined length in the crosslinked biodegradable polyester resin using a twin-screw extruder or melt mixer. When employing this method and using a twin-screw extruder, mixing can be done by first melting the crosslinked biodegradable polyester resin alone and then feeding such a fiber to the halfway of the extruder using a side feeder.

The second method is to utilize what is called pultrusion, in which a continuous filament or a continuous staple yarn in the wound state is unwound and delivered and the fiber is coated and impregnated with a polyester resin, particularly a lactic acid-based resin at the same time that the resin is extruded from a crosshead die. The strand produced by the pultrusion is cut to an appropriate size with a pellet cutter to yield resin pellets. The length of fibers contained in the resin pellets is controlled so that it has almost the same length as resin pellets.

If the resin composition of the present invention, which contains a crosslinked biodegradable polyester resin and an aramid fiber and/or an LCP fiber further contains a carbodiimide compound, the resin composition is allowed to have improved moist heat resistance, better compatibility when melt mixed, and improved mechanical properties.

Examples of the carbodiimide compound used in the present invention include: 4,4'-dicyclohexylmethane carbodiimide, tetramethylxylylene carbodiimide, N,N-dimethylphenyl carbodiimide, and N,N'-di-2,6-diisopropylphenyl carbodiimide. And any carbodiimide compound can be used as long as it has one or more carbodiimide groups per molecule.

Such a carbodiimide compound can be prepared by previously known method. Specifically, the carbodiimide compound can be prepared through a carbodiimide reaction which uses a diisocyanate compound as a raw material and accompanies a decalboxylation reaction. The compound has an isocyanate group on an end group thereof if the compound does not undergo terminal blocking treatment.

For the carbodiimide compound used in the resin composition of the present invention, it is desirable, from the viewpoint of improvement in moist heat resistance and mechanical properties, to use a carbodiimide compound having an isocyanate group left on the end group. An isocyanate group has higher reactivity than a carbodiimide group, thereby producing higher effect.

The amount of the carbodiimide compound mixed is preferably 0.01 to 10 parts by mass and more preferably 0.1 to 5 parts by mass with respect to 100 parts by mass of the sum of the crosslinked biodegradable polyester resin and the aramid fiber and/or the LCP fiber. If the amount is less than 0.01 parts by mass, the effect of improving the moist heat resistance and mechanical properties of the resin composition is not produced, whereas if the amount is more than 10 parts by mass, the heat resistance and moldability are decreased.

The resin composition of the present invention which contains a crosslinked biodegradable polyester resin may further contain a glass fiber, like the polylactic acid-based resin composition described above, to improve the mechanical strength and heat resistance. The details are as described above.

To the resin composition of the present invention which contains a crosslinked biodegradable polyester resin, additives such as pigments, heat stabilizers, antioxidants, weather resistant agents, flame-retardants, plasticizers, lubricants, mold release agents, antistatic agents, fillers or nucleating agents can be added as long as the addition does not impair the properties of the resin composition. The details are as described above.

The resin composition of the present invention which contains a crosslinked biodegradable polyester resin preferably has mechanical properties such that the flexural strength is more than 120 MPa, the flexural modulus is more than 4.0 GPa, the flexural breaking strain is more than 4 %. Preferably the Charpy impact strength is more than 3 kJ/m². Preferably the heat distortion temperature is more than 120°C. And for the moist heat resistance, preferably the retention of strength, which will be described later, is more than 90%.

The polylactic acid-based resin composition of the present invention and the resin composition of the present invention which contains a crosslinked biodegradable polyester resin and an aramid fiber and/or an LCP fiber can be formed into various kinds of molded articles by a molding or forming method such as injection molding, blow molding, extrusion, inflation forming, and vacuum forming, air-pressure forming or vacuum air-pressure forming after sheet forming. Among the methods, injection molding is preferably employed, and not only general injection molding but gas injection molding or injection press molding can also be employed. As an example, the injection molding conditions suitable for the resin composition of the present invention are as follows. The cylinder temperature is the melting point of the resin composition or higher or the temperature at which the resin composition begins to flow or higher, preferably in the range of 180 to 280°C and most suitably in the range of 200 to 270°C. The mold temperature is suitably (the melting point of the resin composition - 20°C) or lower. A too low molding temperature is likely to cause, for example, shorting in resultant molded articles, which leads to unstable operating efficiency, or to cause overloads. Conversely, a too high molding temperature is likely to cause the decomposition of the resin composition, which poses the problems of decrease in the strength of the resultant molded articles and coloring of the same. The molding cycle, which is measured by a method described later, is preferably 70 seconds or less.

In the polylactic acid-based resin composition of the present invention and the resin composition of the invention which contains a crosslinked biodegradable polyester resin, the heat resistance thereof can be enhanced by accelerating the crystallization of the resins. One method of accelerating the crystallization of the resin is to cool the resin in the mold during injection molding. In such a case, it is preferable to keep the mold temperature between (the glass transition temperature of the resin composition + 20C°) and (the melting point of the resin composition - 20C°), both inclusive, and then cool the same to the glass transition temperature or less. For the method of accelerating the crystallization after molding, it is preferable to heat-treat the resin by decreasing the mold temperature directly to the glass transition temperature or less and then increase the mold temperature so that the temperature is between the glass transition temperature of the resin composition and (the melting point of the resin composition - 20C°), both inclusive.

Specific examples of the molded articles produced by using the polylactic acid-based resin composition of the present invention and those of the molded articles produced by using the resin composition of the present invention which contains a crosslinked biodegradable polyester resin include: mobile phone straps; frames of round flat paper fans; buttons; golf tees; resin parts for electric appliances such as parts of personal computer cases and personal computer cases, parts of mobile phone cases and mobile phone cases, and parts of other OA equipment cases; and resin parts for cars such as bumpers, instrument panels, consol boxes, garnishments, door trims, ceilings, floors and surroundings of engines. The molded articles can be formed into films, sheets or blow molded articles.

### Examples

In the following, several examples of the present invention will be described.

Measuring methods used for evaluating the resin compositions of Examples and Comparative Examples below are as follows.

(1) Melt flow rate (hereinafter abbreviated to as "MFR"):
Measured at 190°C with a load 21.2 N in accordance with JIS K-7210 (test conditions 4).

(2) Heat distortion temperature:
Measured with a load 1.8 MPa (Examples 1 to 9, Comparative Examples 1 to 3) or with a load 0.45 MPa (Examples 10 to 18, Comparative Examples 4 to 9) in accordance with ISO 75.

(3) Charpy impact strength
Measured in accordance with ISO 179.

(4) Flexural strength, flexural modulus and flexural breaking strain:
Measured in accordance with ISO 178.

(5) Glass transition temperature of high-strength fiber:
First the high-strength fiber was placed in a pan, heated up to 300°C at a heating rate of 20°C/min., and rapidly cooled with dry ice. The high-strength fiber was then heated up from -20°C to 300°C at a heating rate of 10°C/min. on a differential scanning calorimeter (DSC) to determine the glass transition temperature thereof.

(6) Moist heat resistance
The specimen prepared for measuring the above-described flexural strength was treated at a temperature of 60°C and a humidity of 90% RH for 500 hours and the flexural strength of the specimen was measured. Then the retention of strength was calculated using the measured value to evaluate the moist heat resistance.

(7) Molding cycle
Among resin compositions "A" to "O" described later, all the resin compositions except "M", that is, the resin compositions "A" to "L", "N" and "O" were molded on an injection molding machine (IS-80G, manufactured by Toshiba Machine Co., Ltd) to obtain molded articles. In the molding, the resin compositions "A" to "J", "K", "L" and "O" were melted at a cylinder set temperature between 190 and 170°C and packed into a mold at 105°C at an injection pressure of 100 MPa and injection time of 30 seconds. For the resin composition "N", however, packing a mold under the above conditions resulted in the molding cycle as long as 300 seconds, and the molding conditions were changed. Specifically, the resin composition "N" was packed into a mold at 15°C at an injection pressure of 100 MPa and an injection time of 15 seconds. The molding cycle was defined as the shortest time from when a resin composition was injected (packed, dwelled) into a mold to when a molded article obtained by cooling the resin composition could be removed from the mold without being fixed on the mold or without resistance.

The raw materials used in the Examples and Comparative Examples below are as follows.

(a) Polylactic acid resin (hereinafter abbreviated as "PLA") :
"Nature Works 6201D" manufactured by Cargill-Dow; MFR = 10 g/10 min., melting point 168°C

(b) Ethylene glycol dimethacrylate (hereinafter abbreviated as "EGDM"):
"Blenmer PDE-50", manufactured by Nippon Oils & Fats Co., Ltd.

(c) Polyester fiber:
Polyethylene terephthalate fiber "Bright PET short fiber <527>" (hereinafter abbreviated as "PET fiber"), manufactured by Unitika Ltd.

(d) LCP fiber (polyester fiber) :
"Bectran" manufactured by Kuraray Co., Ltd.; CF1670T (hereinafter abbreviated as "Bectran")

(e) Aramid fiber:
"Technora T322EH3-12" manufactured by Teijin Limited

(f) Glass fiber:
"FT592" manufactured by Asahi Fiber Glass Co., Ltd.

(g) Peroxide:
di-t-butylperoxide "Perbutyl D" manufactured by Nippon Oils & Fats Co., Ltd.

(h) Polyethylene resin:
"520MB" manufactured by Idemitsu Petrochemicals Co., Ltd.

(i) Crosslinked polylactic acid resin:
A Crosslinked polylactic acid resin was prepared as follows. Melt mixing extrusion of PLA was performed on a twin-screw extruder (TEM 37BS, manufactured by Toshiba Machine Co., Ltd.) at a processing temperature of 190°C while feeding the PLA from the top feeder. In the extrusion, a solution, which was prepared by dissolving 1.0 part by mass of polyethylene glycol dimethacrylate as a crosslinking agent (manufactured by Nippon Oils & Fats Co., Ltd.) and 1.0 part by mass of di-t-butylperoxide as a peroxide for accelerating the crosslinking reaction (manufactured by Nippon Oils & Fats Co., Ltd.) in 2.5 parts by mass of glycerin diacetomonocaprylate as a plasticizer, was poured along onto the halfway of the mixer using a pump. The discharged resin was cut into pellets to give a crosslinked biodegradable polyester resin (hereinafter abbreviated as "crosslinked PLA"). The MFR of the obtained crosslinked PLA was 1.2 g/10 min.

(j) Carbodiimide compound:
"LA-1" manufactured by Nisshinbo Industries Inc.; The isocyanate group content was 1 to 3%.

(k) Carbodiimide compound:
"HMV-8CA" manufactured by Nisshinbo Industries Inc.; a compound having an isocyanate group blocked.

### Example 1

Bectran, as a high-strength fiber, bundled into a sheet 2 mm wide was passed through the molten polylactic acid resin at 190°C over 10 cm in long. The sheet of Bectran was then cooled in the air to be solidified and the solidified sheet of Bectran was chopped into pellets of 2 mm long to give bundled Bectran.

Extrusion of PLA was performed on a twin-screw extruder (TEM 37BS, manufactured by Toshiba Machine Co., Ltd.), while venting, at a barrel temperature of 200°C, a screw revolution speed of 130 rpm and a discharge amount of 15 kg/h while feeding 90 parts by mass of the PLA from the root feed opening. Further, 0.22 parts by mass of EGDM, 0.45 parts by mass of a peroxide, 5 parts by mass of a glass fiber and 5 parts by mass of the bundled Bectran were fed into the cylinder. The discharged resin was cut into pellets to give pellets of the resin.

The pellets were vacuum-dried at 70°C for 24 hours. From the dried pellets, specimens for measuring general physical properties (ISO type) were prepared by using an IS-100E type injection molding machine, manufactured by Toshiba Machine Co., Ltd., and used for such measurements. The molding conditions and the results of the measurements are shown in Table 1.

**[Table 1]**

| | | | | | Examples | | | | | | | | | Comparative Examples | | |
|---|---|---|---|---|---|---|---|---|---|---|---|---|---|---|---|---|
| | | | | | 1 | 2 | 3 | 4 | 5 | 6 | 7 | 8 | 9 | 1 | 2 | 3 |
| Raw material mixing ratio (part by mass) | PLA | | | | 90 | 90 | 90 | 90 | 90 | 90 | 90 | 90 | 90 | 95 | 90 | 90 |
| | Glass fiber | | | | 5 | 5 | 5 | 5 | 5 | 5 | 5 | 5 | 5 | 5 | 10 | 5 |
| | High-strength fiber | | Polyester fiber | (Bectran) | 5 | 5 | 5 | 5 | 5 | 5 | - | 5 | - | - | - | 5 |
| | | | | (PET fiber) | - | - | - | - | - | - | 5 | - | - | | | - |
| | | | Aramid fiber | | - | - | - | - | - | - | - | - | 5 | - | - | - |
| | (Meth)acrylic ester compound (EGDM) | | | | 0.22 | 0.22 | 0.22 | 0.22 | 0.22 | 0.22 | 0.22 | 0.22 | 0.17 | 0.17 | 0.17 | - |
| | Peroxide | | | | 0.45 | 0.45 | 0.45 | 0.45 | 0.45 | 0.45 | 0.45 | 0.45 | 0.35 | 0.35 | 0.35 | - |
| Treatment of high-strength fiber before mixing | | Bundling | | | Present | Present | Present | Present | Present | Present | Present | Absent | Present | - | - | Absent |
| | | Bundle length (mm) | | | 2 | 3 | 4 | 0.5 | 10 | 3 | 3 | - | 3 | - | - | - |
| | | Bundle width (mm) | | | 2 | 3 | 4 | 0.5 | 10 | 3 | 3 | - | 3 | - | - | - |
| | | Resin used for bundling | | | polylactic acid | polylactic acid | polylactic acid | polylactic acid | polylactic acid | polyethyl ene | polylactic acid | - | polylactic acid | - | - | - |
| Properties of high-strength fiber | | Peak of Tg at 90°C or less | | | not observed | not observed | not observed | not observed | not observed | not observed | 76°C | not observed | not observed | - | - | not observed |
| Operating efficiency during mixing | | Time intervals at which clogging of the fiber introduction portion occurs (min.) | | | >60 | >60 | >60 | 47 | >60 | >60 | >60 | 33 | >60 | - | - | 41 |
| Operating efficiency during molding | | Time required for cooling (sec.) | | | 30 | 30 | 30 | 30 | 30 | 30 | 44 | 30 | 25 | 48 | 49 | 30* |
| of molded articles | | Flexural modulus (GPa) | | | 6.1 | 5.8 | 5.9 | 5.9 | 5.9 | 5.8 | 5.5 | 6.0 | 6.4 | 5.5 | 8.3 | 6.0 |
| | | Flexural breaking strain (%) | | | 4.0 | 4.0 | 4.1 | 3.9 | 3.8 | 3.9 | 33.8 | 4.0 | 4.4 | 2.6 | 2.6 | 4.1 |
| | | Charpy impact strength (kJ/m²) | | | 11.3 | 11.0 | 11.1 | 10.7 | 8.8 | 8.7 | 7.9 | 11.1 | 6.9 | 3.8 | 4.5 | 10.7 |
| | | Heat distortion temperature (°C) | | | 80 | 78 | 80 | 76 | 77 | 80 | 75 | 79 | 95 | 98 | 99 | 52 |

| | | | | | | | | | | | | | | | | |
|---|---|---|---|---|---|---|---|---|---|---|---|---|---|---|---|---|
| * A low temperature mold was used. | | | | | | | | | | | | | | | | |

### Examples 2 to 9 and Comparative Examples 1 to 3

The amounts and kinds of the polylactic acid resin, glass fiber, high-strength fiber, resin for bundling, EGDM, and peroxide used were changed as shown in Table 1. The presence or absence of bundling was also changed as shown in Table 1. Pellets of polylactic acid-based resin compositions were obtained in the same manner as in Example 1 except the changes described above. The obtained pellets were injection-molded and the physical properties of the molded articles were measured.

The evaluations for Examples 2 to 9 and Comparative Examples 1 to 3 are also shown in Table 1.

As is apparent from Table 1, in Examples 1 to 9, the resin compositions were obtained which excelled in impact resistance, heat resistance and flexibility.

In the resin compositions obtained in Examples 1 to 3, the bundle size of each high-strength fiber was within the range of 1 to 5 mm in width and 1 to 5 mm in length. This resulted in good operating efficiency during mixing compared with that of the resin composition obtained in Example 4, where the bundle width and length were below the range, and good impact resistance compared with that of the resin composition obtained in Example 5, where the bundle width and length were above the range. Besides, in the resin compositions obtained in Examples 1 to 3, polylactic resins, as polyester resins, were used for the bundling of the high-strength fibers, which resulted in good impact resistance compared with that of the resin composition obtained in Example 6, where a polyethylene was used. Further, in each of the resin compositions obtained in Examples 1 to 3, a polyester fiber whose glass transition temperature was not observed at 90°C or less was used as the high-strength fiber. This resulted in good moldability, in other words, good rapidity of solidification by cooling during molding compared with that of the resin composition obtained in Example 7, where the glass transition temperature of the polyester fiber used was observed at 76°C.

In the resin composition obtained in Example 8, the high-strength fiber was not bundled, which resulted in somewhat poor operating efficiency compared with that of the resin compositions obtained in the other examples. In the resin composition obtained in Example 9, a polyester fiber was not used as the high-strength fiber, which resulted in somewhat poor impact resistance compared with that of the resin compositions obtained in the other examples.

In Comparative Examples 1 and 2, the resin compositions were prepared without any high-strength fiber and as such, were poor in impact resistance and flexibility. In Comparative Example 3, the resin composition was prepared without any (meth)acrylic ester compound and without bundling the high-strength fiber and as such, was poor in impact resistance and operating efficiency.

### Examples 10 to 20

The raw materials were fed into a twin-screw extruder (TEM 37BS, manufactured by Toshiba Machine Co., Ltd.) at mixing ratio shown in Table 2, subjected to melt mixing extrusion at a processing temperature between 170°C to 190°C, and the discharged resins were cut into pellets to give resin compositions A to K.

### Comparative Examples 4 to 7

The raw materials were fed into a twin-screw extruder (TEM 37BS, manufactured by Toshiba Machine Co., Ltd.) at mixing ratio shown in Table 2, subjected to melt mixing extrusion at a processing temperature between 170°C to 190°C, and the discharged resins were cut into pellets to give resin compositions L, M and O. In Comparative Example 6, however, the hopper of the extruder got clogged with the aramid fiber, and therefore the resin composition N could not be obtained.

The evaluations of the physical properties are summarized in Table 2.

**[Table 2]**

| | | | Examples | | | | | | | | | | | Comparative Examples | | | |
|---|---|---|---|---|---|---|---|---|---|---|---|---|---|---|---|---|---|
| | | | 10 | 11 | 12 | 13 | 14 | 15 | 16 | 17 | 18 | 19 | 20 | 4 | 5 | 6 | 7 |
| Resin compositions | | | A | B | C | D | E | F | G | H | I | J | K | L | M | N | O |
| Raw materials mixed | Crosslinked PLA (parts by mass) | | 99 | 95 | 90 | 90 | 90 | 90 | 70 | 90 | 90 | 90 | 90 | 100 | 100 | 60 | |
| | PLA (parts by mass) | | | | | | | | | | | | | | | | 90 |
| | Aramid fiber (parts by mass) | | 1 | 5 | 10 | 10 | 10 | 10 | 30 | | 10 | 10 | 10 | | | 40 | 10 |
| | LCP fiber (parts by mass) | | | | | | | | | 10 | | | | | | | |
| | Carbodiimide compound (parts by mass) | (LA-1) | 1.5 | 1.5 | 0.1 | 0.5 | 1.5 | 5.0 | 1.5 | 1.5 | | | 20 | | 1.5 | 1.5 | 1.5 |
| | | (HMV-8CA) | | | | | | | | | 1.5 | | | | | | |
| Properties | Flexural strength (MPa) | | 121 | 133 | 131 | 135 | 135 | 137 | 146 | 140 | 137 | 130 | 125 | 101 | 119 | - | 102 |
| | Flexural modulus (GPa) | | 4.3 | 6.1 | 6.4 | 6.6 | 6.8 | 6.9 | 7.1 | 6.5 | 6.7 | 6.5 | 5.5 | 4.4 | 4.2 | - | 7.2 |
| | Flexural breaking strain (%) | | 4.3 | 4.7 | 4.6 | 4.8 | 4.9 | 4.9 | 5.2 | 4.4 | 4.9 | 4.4 | 4.2 | 2.7 | 4.3 | - | 5.1 |
| | Charpy impact strength (kJ/m²) | | 3.2 | 8.6 | 14.1 | 14.6 | 15.4 | 15.8 | 17.8 | 12.2 | 15.1 | 13.9 | 14.8 | 1.8 | 2.0 | - | 13.5 |
| | Heat distortion temperature (°C) | | 125 | 131 | 134 | 139 | 136 | 134 | 140 | 121 | 137 | 135 | 76 | 125 | 120 | - | 54 |
| | Moist heat resistance (%) | | 95 | 100 | 90 | 98 | 100 | 100 | 100 | 100 | 90 | 58 | 100 | 45 | 82 | - | 78 |
| Moldability | Molding cycle (sec) | | 70 | 70 | 65 | 65 | 60 | 60 | 55 | 60 | 60 | 75 | 70 | 90 | 85 | - | 45 |
| | Mold temperature (°C) | | 105 | 105 | 105 | 105 | 105 | 105 | 105 | 105 | 105 | 105 | 105 | 105 | 105 | - | 15 |

The results show that the resin compositions A to I obtained in Examples 10 to 18 excelled in flexural properties, impact resistance, heat resistance, moist heat resistance and moldability. The resin composition J obtained in Example 19 contained no carbodiimide compound and as such, had somewhat inferior impact resistance, moist heat resistance and moldability to those of the resin compositions obtained in Examples 12 to 15 all of which were prepared under the same conditions except that a carbodiimide compound was included in each composition. The resin composition K obtained in Example 20 contained a carbodiimide compound in as large amount as 20 parts by mass and as such, had somewhat inferior heat resistance and moldability to those of the resin compositions obtained in Examples 12 to 15 all of which were prepared under the same conditions except that an appropriate amount of a carbodiimide compound was included in each composition.

The resin composition obtained in Comparative Example 4 contained neither an aramid fiber, nor an LCP fiber, nor a carbodiimide compound, which resulted in inferior impact resistance, inferior moist heat resistance and inferior moldability.

The resin composition obtained in Comparative Example 5 contained a carbodiimide compound but neither an aramid fiber nor an LCP fiber and as such, had inferior impact resistance, moist heat resistance and moldability to those of the resin compositions obtained in Examples 10 to 18, each of which contained a carbodiimide compound and an aramid fiber and/or an LCP fiber.

The resin composition obtained in Comparative Example 7 contained a PLA but not a crosslinked PLA and as such, had inferior heat resistance and moist heat resistance to those of the resin composition obtained in Example 14, which contained a crosslinked PLA.

## Claims

1. A resin composition comprising a crosslinked biodegradable polyester resin and a high-strength fiber.

2. The resin composition according to claim 1, comprising: a polylactic acid resin composition which is prepared by mixing a polylactic acid resin and a (meth)acrylic ester compound in the presence of a peroxide; and a high-strength fiber.

3. The resin composition according to claim 2, wherein the high-strength fiber is a polyester fiber.

4. The resin composition according to claim 3, wherein a glass transition temperature of the polyester fiber is not observed at 90°C or less.

5. The resin composition according to claim 1, comprising: 70 to 99% by mass of the crosslinked biodegradable polyester resin; and 1 to 30% by mass of an aramid fiber and/or an LCP fiber.

6. The resin composition according to claim 5, comprising 0.01 to 10 parts by mass of a carbodiimide compound with respect to 100 parts by mass of the sum of the crosslinked biodegradable polyester resin and the aramid fiber and/or the LCP fiber.

7. The resin composition according to claim 5, comprising 0.01 to 20 parts by mass of the (meth)acrylic ester compound with respect to 100 parts by mass of the biodegradable polyester resin.

8. The resin composition according to claim 5, wherein the biodegradable polyester resin is a polylactic acid.

9. The resin composition according to claim 6, wherein the carbodiimide compound has an isocyanate group on an end group thereof.

10. The resin composition according to claim 5, wherein the biodegradable polyester resin is produced from a plant raw material.

11. A method of producing a resin composition, wherein in the production of a polylactic acid-based resin composition which comprises: a polylactic acid resin composition prepared by mixing a polylactic acid resin and a (meth)acrylic ester compound in the presence of a peroxide; and a high-strength fiber, the high-strength fiber is in advance bundled in sizes of 1 to 5 mm wide and 1 to 5 mm long.

12. The production method according to claim 11, wherein a polyester resin is used for bundling the high-strength fiber.

13. A molded article, produced by molding the resin composition according to claim 2.

14. A molded article, produced by molding the resin composition according to claim 5.
